# DEMANDE DE BREVET EUROPEEN

(11) **EP 0 582 513 A1**
(43) Date de publication de la demande: **09.02.1994**
(21) Numéro de dépôt: 93401992.8
(22) Date de dépôt: 02.08.1993
(51) Int. Cl.: E05B 19/04, E05B 49/00

(54) **Clef mécano-électronique**

(30) Priorité: 03.08.1992 FR 9209612
(71) Demandeur: VALEO SECURITE HABITACLE, 78290 Croissy-Sur-Seine (FR)
(72) Inventeur: Fremiot, Serge, F-95870 Bezons (FR)
(74) Mandataire: Gamonal, Didier

(57) **Abrégé**

Ensemble clé-émetteur pour la commande à distance de certaines fonctions d'un véhicule automobile, contenu dans un boîtier (10) constitué notamment d'un premier capot (12) venant se fixer sur un second capot (14) comportant à l'une de ses extrémités une fente (22) destinée à recevoir une partie plate (28) d'un insert de clé (24), des moyens de solidarisation du capot (14) et de l'insert de clé (24) constitués par une ouverture (36) ménagée dans la partie plate (28) de l'insert (24) destinée à coopérer avec un bossage (38) de forme complémentaire ménagé dans la fente (22) du second capot (14).

## Description

La présente invention concerne d'une manière générale un ensemble clé-émetteur pour la commande à distance de certaines fonctions d'un véhicule automobile, comme l'ouverture et la fermeture des ouvrants tels que portes ou coffre ou la mise en route d'une alarme.

L'émetteur d'un tel ensemble est en général contenu dans un boîtier tenu par l'utilisateur et est destiné à coopérer avec un récepteur placé à l'intérieur du véhicule.

La transmission entre émetteur et récepteur peut s'effectuer par tout moyen approprié tel que infrarouge, radio-fréquence...

Le boîtier de l'émetteur contient les constituants électroniques nécessaires à son fonctionnement et est constitué par l'assemblage de deux capots, par exemple en matière plastique moulée.

Un tel ensemble comporte en plus un insert de clé métallique destiné à assurer notamment la fonction de clé de contact et donc de déverrouillage de l'antivol de direction.

L'insert de clé doit être fixé au boîtier dans une position prédéterminée.

Habituellement, la fixation d'un tel insert est assurée par une vis coopérant avec un trou taraudé venu de moulage avec le boitier, la vis traversant un trou circulaire ménagé dans la partie plate de l'insert de clé.

Si une telle disposition donne globalement satisfaction sur le plan fonctionnel, il n'en est pas de même sur le plan économique.

L'agencement du trou taraudé dans le boitier est couteux et la nécessité d'une vis rend difficilement automatisable l'opération de solidarisation de l'insert vis-à-vis du boitier.

Ces éléments augmentent le coût d'un tel émetteur de manière prohibitive surtout quand il s'agit d'une fabrication en grande série comme c'est le cas dans le domaine automobile.

La présente invention remédie à ces inconvénients et propose à cet effet un ensemble clé-émetteur pour la commande à distance de certaines fonctions d'un véhicule automobile, contenu dans un boitier constitué notamment d'un premier capot venant se fixer sur un second capot comportant à l'une de ses extrémités une fente destinée à recevoir une partie plate d'un insert de clé, des moyens de solidarisation du capot et de l'insert de clé dans une position prédéterminée, caractérisé en ce que les moyens de solidarisation sont constitués par une ouverture ménagée dans la partie plate de l'insert destinée à coopérer avec un bossage de forme complémentaire ménagé dans la fente du second capot.

Selon d'autres caractéristiques de l'invention :
- la position prédéterminée est unique,
- le bossage présente, à partir de l'extrémité débouchante de la fente, une section croissante,
- l'ouverture est située sur l'axe de l'insert de clé,
- le capot comporte une lumière débouchante située globalement au droit du bossage,
- la lumière est obturée par un bouchon en plastique ou en caoutchouc.

L'invention sera mieux comprise avec la description qui va suivre en regard des dessins annexés dans lesquels :
- la figure 1 est une coupe longitudinale de l'ensemble d'un boitier d'un émetteur équipé d'un insert de clé selon l'invention ;
- la figure 2 est une vue de dessus d'un insert de clé ;
- la figure 3 est une vue de dessus partielle d'un des capots du boîtier de l'émetteur.

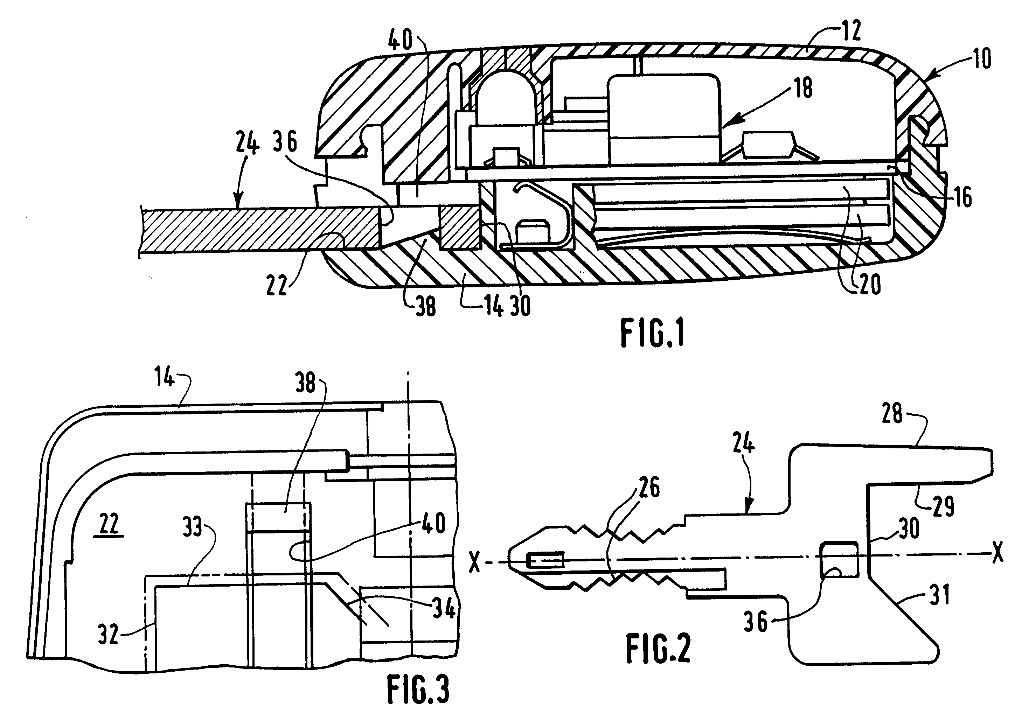

Tel que représenté en particulier figure 1, le boîtier de l'émetteur est désigné d'une façon générale par la référence 10 et comprend un premier capot ou capot supérieur 12 venant se clipser sur un second capot ou capot inférieur 14.

Le capot supérieur 12 contient notamment un circuit imprimé 16 sur lequel est implanté un ensemble de composants électroniques 18 nécessaires au bon fonctionnement de l'émetteur. Ces composants ne faisant pas partie de la présente invention ne seront pas décrits ici plus en détail.

Le boitier inférieur 14 comporte notamment un logement destiné à recevoir des piles 20 et dans sa partie avant, à gauche sur la figure, un évidement ou fente 22 destiné à recevoir un insert de clé 24 représenté en particulier figure 2.

Cet insert de clé 24 comprend à l'une de ses extrémités une série de crans 26 assurant le codage mécanique de l'ensemble.

L'extrémité opposée aux crans 26 se termine par une partie plate 28 qui, dans l'exemple représenté, est globalement en forme de U dont les flancs intérieurs 29,30,31 présentent une forme complémentaire des flancs 32,33,34 de la fente 22 (figure 3) ménagée à l'avant du capot inférieur 14.

Pour assurer la solidarisation dans le capot inférieur 14 de l'insert de clé 24, on ménage dans sa partie plate 28 une ouverture 36 située sur l'axe général X-X. L'ouverture 36, représentée sur le dessin, présente une forme carrée mais pourrait être par exemple de forme rectangulaire sans pour cela sortir du cadre de l'invention.

L'ouverture 36 est destinée à coopérer avec un pion ou bossage 38 (voir figures 1 et 3) de forme complémentaire obtenu par moulage avec le capot inférieur 14 et situé dans la fente 22.

Le bossage 38, ainsi qu'on peut le voir en particulier figure 1, présente, à partir de l'extrémité débouchante de la fente 22, une section croissante.

L'insert de clé 24 étant introduit dans la fente 22, le flanc 30 franchit le bossage 38 grâce à sa section croissante et l'ouverture 36 vient coopérer avec ledit bossage 38 de manière à assurer par clipsage une fixation de l'insert de clé 24 dans le capot inférieur 14 et donc le boîtier 10.

On notera que cette fixation s'effectue dans une position prédéterminée unique.

De préférence le capot inférieur 14 comporte, au droit du bossage 28, une lumière 40 débouchant sur la face supérieure du capot 14.

Grâce à cette lumière 40, on peut, après avoir séparé les deux capots 12 et 14, venir déclipser l'insert 24 par appui d'un outil spécial sur le bossage 38. Ainsi on peut changer l'insert de clé 24 tout en gardant l'ensemble boîtier-émetteur 10.

Afin d'éviter toute infiltration, par exemple d'eau, à l'intérieur des capots 12 et 14, la lumière 40 est obturée par un bouchon en plastique ou en caoutchouc.

## Revendications

**1-** Ensemble clé-émetteur pour la commande à distance de certaines fonctions d'un véhicule automobile, contenu dans un boîtier (10) constitué notamment d'un premier capot (12) venant se fixer sur un second capot (14) comportant à l'une de ses extrémités une fente (22) destinée à recevoir une partie plate (28) d'un insert de clé (24), des moyens de solidarisation du capot (14) et de l'insert de clé (24) dans une position prédéterminée, caractérisé en ce que les moyens de solidarisation sont constitués par une ouverture (36) ménagée dans la partie plate (28) de l'insert (24) destinée à coopérer avec un bossage (38) de forme complémentaire ménagé dans la fente (22) du second capot (14).

**2-** Ensemble selon la revendication 1, caractérisé en ce que la position prédéterminée est unique.

**3-** Ensemble selon la revendication 1, caractérisé en ce que le bossage (38) présente, à partir de l'extrémité débouchante de la fente (22), une section croissante.

**3-** Ensemble selon la revendication 1, caractérisé en ce que l'ouverture (36) est située sur l'axe (X-X) de l'insert de clé (24).

**5-** Ensemble selon la revendication 1, caractérisé en ce que le capot (14) comporte une lumière débouchante (40) située globalement au droit du bossage (38).

**6-** Ensemble selon la revendication 5, caractérisé en ce que la lumière (40) est obturée par un bouchon en plastique ou en caoutchouc.
